(19) **Europäisches Patentamt**
**European Patent Office**
**Office européen des brevets**

(11) **EP 4 621 508 A1**

(12) **EUROPEAN PATENT APPLICATION**

(43) Date of publication:
**24.09.2025 Bulletin 2025/39**

(21) Application number: **24164231.3**

(22) Date of filing: **18.03.2024**

(51) International Patent Classification (IPC):
**G05B 19/409** *(2006.01)*    **G05B 23/02** *(2006.01)*
**G06F 3/04847** *(2022.01)*    *G05B 19/042* *(2006.01)*
**G05B 19/418** *(2006.01)*

(52) Cooperative Patent Classification (CPC):
**G05B 19/409; G05B 23/0216; G06F 3/04847;**
**G06Q 10/0631;** G05B 19/41875; G05B 23/0272;
G05B 2219/32128

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **GEA Westfalia Separator Group GmbH**
**59302 Oelde (DE)**

(72) Inventors:
• **WITTKAEMPER, Lars**
**48149 Münster (DE)**

• **IRRGANG, Sven**
**59302 Oelde (DE)**
• **VEER, Thomas**
**49832 Beesten (DE)**
• **BUSSMANN, Daniel**
**48739 Legden (DE)**
• **ZELLERHOFF, Judith**
**59302 Oelde (DE)**

(74) Representative: **Bardehle Pagenberg**
**Partnerschaft mbB**
**Patentanwälte Rechtsanwälte**
**Prinzregentenplatz 7**
**81675 München (DE)**

(54) **METHOD AND SYSTEM FOR GENERATING A GRAPHICAL USER INTERFACE FOR CONTROLLING AND/OR MONITORING A CLEANING-IN-PLACE CYCLE**

(57) The present disclosure relates to a computer-implemented method for generating a graphical user interface (GUI) for controlling and/or monitoring a cleaning-in-place (CIP) cycle for an industrial production line having one or more equipment, the method comprising: generating at least one display element configured to show information associated with the CIP cycle; generating at least one control element configured to switch between at least two views; and including the at least one display element and the at least one control element in the GUI. The present disclosure further relates to a corresponding GUI, a control unit, a CIP station comprising said control unit and to a corresponding computer program.

Fig. 9

EP 4 621 508 A1

**Description**

**Technical field of the invention**

The present disclosure concerns a computer-implemented method for generating a graphical user interface (GUI) for controlling and/or monitoring a cleaning-in-place (CIP) cycle for an industrial production line having one or more equipment. The present disclosure further concerns a corresponding graphical user interface, control unit and CIP station. Furthermore, the present disclosure concerns a computer program for carrying out the aforementioned method.

**Technical background**

Specifically in the food and beverage industry, like the dairy industry, the maintenance of stringent hygiene standards is paramount to uphold product quality and comply with regulatory requirements. Cleaning-in-Place (CIP) stations, typically attached to industrial production lines in the realm of the food and beverage industry, have emerged as indispensable components in industrial production lines, dedicated to ensuring the cleanliness and sanitization of various equipment or components critical to the production process.

Typically, a CIP solution (comprising caustic, acid and/or water) is circulated by a CIP station through pipelines, tanks, and equipment of the industrial production line using pumps in different steps of a plurality of steps of a CIP cycle, wherein a CIP cycle may comprise CIP steps like pre-flushing, sanitizing, flushing etc. This circulation process dislodges and removes product residues, contaminants, and microbial growth from the industrial production line and its equipment. Temperature control may be incorporated to optimize the cleaning process, with elevated temperatures enhancing the effectiveness of cleaning agents. The CIP solution circulates for a predetermined duration to ensure thorough cleaning and sanitation. Afterwards, a rinsing phase is initiated to remove the CIP solution and residues from the industrial production line and its equipment.

Graphical user interfaces can be described as a tool that enables individuals to interact with a computer system through visual elements, such as menus and buttons. Unlike text-based interfaces, which enable individuals to interact with a computer system via text, graphical user interfaces provide a visual option of interacting with a system. The visual option is often seen as more intuitive and more effective than other forms of interfaces. Accordingly, graphical user interfaces not only simplify the man-machine interaction but also increase productivity by streamlining workflows and reducing the cognitive load of the user. Used correctly, graphical user interfaces provide various advantages to the user.

Dashboards and graphical user interfaces are commonly used in industries such as the food and beverage industry. The respective graphical user interfaces are typically in the form of touch sensitive tablets that are used to monitor and control machines and processes. Those commonly known graphical user interfaces perform the monitoring and controlling by means of passive data elements such as Overall Equipment Efficiency (OEE) indicators, status messages and alarm notifications. However, there is a lack of dedicated graphical user interfaces for specifically analyzing, monitoring, and controlling a cleaning-in-place process. Such a graphical user interface is of importance since insufficient cleaning can at best lead to a faulty operation of the industrial production line or of the specific equipment, causing an efficiency drop due to product losses and/or problems in downstream processes, or in the worst case to a complete production stop due to major issues with the industrial production line.

Recognizing these issues, the need for an improved approach to analyze, monitor and control the cleaning process of an industrial production line, specifically for an industrial production line used in the food and beverage industry, is apparent.

**Summary of the invention**

The above-mentioned objects and other objects, which become apparent from the following description, are solved at least in part by the subject-matter of the independent claims. Preferred embodiments are subject of the dependent claims.

According to a 1st aspect, a computer-implemented method for generating a graphical user interface (GUI) for controlling and/or monitoring a cleaning-in-place (CIP) cycle for an industrial production line having one or more equipment is provided, the method comprising: generating at least one display element configured to show information associated with the CIP cycle; generating at least one control element configured to switch between at least two views; and including the at least one display element and the at least one control element in the GUI.

Generating at least one display element configured to show information associated with the CIP cycle may enable the user to analyze the CIP cycle. It may also enable the user to monitor the CIP cycle. Further, the generation of at least one display element may provide the user with the option to control the CIP cycle. An increase in analysis, monitoring and controlling capabilities may lead to a higher sustainability of the process since the user may be able to react to failures and minimize risks. Moreover, generating at least one display element may enable the user to receive high quality feedback with regards to the CIP cycle. Provided with a higher quality feedback, the user may be better able to react to specific conditions and may support the decision whether to carry out again the complete CIP cycle or individual steps thereof have to finally achieve a sufficient cleaning quality.

Further, generating at least one control element configured to switch between at least two views may enable a user to seamlessly access an increased amount of information. This may consequently have the advantage of providing the user with a straightforward overview of more information that would not be possible without the control element. This may further enhance analysis, monitoring and controlling of the CIP cycle through the user. Moreover, generating at least one control element which may lead to the user being able to access an increased amount of information, the user may also be able to better react to the information. Thus, reaction time of the user may also be improved.

In addition, including the at least one display element and the at least one control element in the GUI may have the advantage of providing the user with a holistic overview of the whole CIP cycle. In particular, including the at least one display element and the at least one control element in the GUI may enable the user to receive comprehensive feedback with regards to the condition of the industrial production line and more specifically, with regards to the condition of the one or more equipment of the production line.

According to a 2nd aspect in the first aspect, the two or more views comprise a first view showing process specific CIP information and a second view showing equipment specific CIP information.

The two ore more views comprising a first view showing process specific CIP information and a second view showing equipment specific CIP information may allow the user to view the information in a filtered manner, i.e., the user may hide, for example, the process specific CIP information or the equipment specific CIP information, which may further reduce the user's cognitive load required to interpret and understand the displayed information. Moreover, the first view showing process specific CIP information and the second view showing equipment specific CIP information may be particularly helpful for the user to analyze, monitor and control either the CIP cycle with respect to the complete industrial production line or with respect to a specific equipment.

According to a 3rd aspect in any one of the preceding aspects, the step of generating the at least one display element comprises generating a CIP cycle quality display element configured to show an overall quality metric of the CIP cycle.

Generating a CIP cycle quality display element that shows an overall quality metric of the CIP cycle may enable the user to obtain a quick overview of the overall quality of the CIP cycle. Thus, a user may not be burdened with an overload of information. Instead, a user may be provided with one simple display, the CIP cycle quality display, which may aid the user in making decisions more quickly and correctly.

According to a 4th aspect in any one of the preceding aspects, the method of any one of the preceding aspects, the step of generating the at least one display element comprises generating a CIP cycle element comprising a plurality of CIP cycle step elements, wherein each of the plurality of the CIP cycle step elements is configured to display information associated with a CIP step of the CIP cycle.

Generating a CIP cycle element comprising a plurality of CIP cycle step elements may provide the user the advantage of receiving a structured overview of the entire CIP cycle. More specifically, the CIP cycle step elements may enable the user to further drill down on an area of interest and improve decision making capabilities. For example, the user may be able to better locate a specific fault occurred during execution of the CIP cycle. This may improve overall sustainability of the process since the user may be able to identify and fix the fault in a more efficient manner.

According to a 5th aspect in any one of the preceding aspects, the step of generating the at least one display element comprises generating a CIP cycle history element configured to display a historical overall quality metric of each of a plurality of CIP cycles.

Generating a CIP cycle history element that displays a historical overall quality metric of each of a plurality of CIP cycles may enable the user to analyze the quality performance of previously conducted CIP cycles. This may enable the user to recognize specific trends and behaviors with respect to quality of the CIP cycles over time. Using historical information may generally improve the analysis and monitoring and controlling of CIP cycles and may be valuable for the user to incorporate when identifying and fixing faults.

According to a 6th aspect in the 5th aspect, the step of generating the at least one control element comprises generating a time range selection element configured to adjust a number of the plurality of CIP cycles for which the historical overall quality metric is displayed according to a selected time range.

Generating a time range selection element that adjusts the number of the plurality of CIP cycles for which the historical overall quality metric is displayed may enable the user to analyze the CIP process in a specific time frame. Accordingly, the time range selection element may be used to provide the user with the right amount of information, i.e., not burden the user with too much information but also provide enough information for the user to analyze, monitor and control the CIP cycle.

According to a 7th aspect in any one of the preceding aspects, the step of generating the at least one control element comprises generating a parameter selection element configured to adapt the content of a plurality of parameter display elements according to a selected parameter associated with the CIP cycle.

Generating a parameter selection element that is configured to adapt the content of a plurality of parameter display elements according to a selected parameter may further improve the analysis, monitoring and controlling of the CIP cycle. For example, the generation of a parameter selection element may enable the user to choose between receiving more detailed information regarding specific parameters associated with the CIP cycle. Consequently, a user is able to perform analysis, monitoring and controlling on a more granular level. This may lead to enhanced sustainability of the process since the user's reaction and interpretation options may be improved.

According to an 8th aspect in the 7th aspect, a first parameter display element of the plurality of parameter display elements is configured to display parameter information associated with one or more CIP steps of the CIP cycle.

Displaying parameter information associated with one or more CIP steps of the CIP cycle may provide the user with parameter specific overview per CIP step. This may enable the user to analyze, monitor and control the behavior of a specific parameter throughout the CIP cycle. Moreover, displaying parameter information associated with one or more CIP Steps of the CIP cycle may provide a more granular and more precise display of information leading to an improved reaction by the user to occurring faults.

According to a 9th aspect in the 7th aspect, a second parameter display element of the plurality of parameter display elements is configured to display parameter information over a period of time; wherein the second parameter display element further displays a confidence interval of the parameter information.

Displaying parameter information over a period of time may enable the user to precisely determine the point in time at which a fault and/or an insufficiently thorough cleaning step occurred. This may improve a user's response to a fault and/or to an insufficiently thorough cleaning step since the user may be able to pinpoint the exact time at which the fault occurred and/or at which the insufficiently thorough cleaning step took place. More generally, displaying parameter information over a period of time may further improve analysis, monitoring and controlling of the CIP cycle.

Displaying a confidence interval of the parameter information may further provide the user with additional information regarding the accuracy of the displayed information. The user may be able to incorporate the additional information with regards to the confidence interval into the response. This may also improve analysis, monitoring and controlling of the CIP cycle.

According to a 10th aspect in the 7th to 9th aspect, the selected parameter associated with the one or more CIP steps of the CIP cycle is one of: a temperature parameter; a conductivity parameter; a bowl speed parameter; a motor current parameter; an ejection parameter; or a vibration parameter.

The parameters being one of a temperature parameter, a conductivity parameter, a bowl speed parameter, a motor current parameter, an ejection parameter, or a vibration parameter may be particularly suitable for analyzing, monitoring and controlling the one or more CIP steps of the CIP cycle as they are in direct correlation with the quality performance of the CIP cycle and/or of its individual steps. Consequently, the aforementioned parameters may allow to derive meaningful information to the user about the CIP cycle.

According to an 11th aspect in any one of the preceding aspects the one or more equipment comprises an industrial separator.

The aforementioned aspects are particularly well-suited for monitoring, analyzing and/or controlling the quality performance of CIP cycles carried out for industrial production lines including at least one separator.

According to a 12th aspect, a graphical user interface (GUI) is generated according to any one of the aspects 1 to 11.

The aforementioned advantages apply to this aspect.

According to a 13th aspect, a control unit usable with a cleaning-in-place (CIP) station configured to display a graphical user interface (GUI) according to aspect 12 is provided.

The aforementioned advantages apply to this aspect.

According to a 14th aspect, a cleaning-in-place, CIP, station comprising a control unit according to aspect 13.

The aforementioned advantages apply to this aspect.

According to a 15th aspect, a computer program comprising instructions which, when executed by a computer, cause the computer to carry out the method of any one of aspects 1 to 11.

The aforementioned advantages apply to this aspect.

## Brief description of the figures

Various aspects of the present invention are described in more detail in the following by reference to the accompanying figures without the present invention being limited to the aspects of these figures.

Fig. 1    depicts a structure of an industrial production line including equipment and a CIP station.

Fig. 2    depicts a CIP cycle including a plurality of CIP steps.

Fig. 3    depicts a diagram of parameters produced during a CIP cycle of an industrial production line according to aspects of the present disclosure.

Fig. 4    depicts a diagram of parameters produced during a CIP cycle of a separation device according to aspects of the present disclosure.

Fig. 5    depicts a structure of an industrial production line including equipment, a CIP station, and a CIP analysis module according to aspects of the present disclosure.

Fig. 6    depicts a CIP analysis module, a display device, and an equipment according to aspects of the present disclosure.

Fig. 7    depicts a diagram showing temperature profiles of a plurality of CIP cycles according to aspects of the present disclosure.

Fig. 8    depicts a process of data collection, preparation, model training and model deployment according to aspects of the present disclosure.

Fig. 9    depicts an example of a graphical user interface according to aspects of the present disclosure.

Fig. 10    depicts a further example of a graphical user interface according to aspects of the present disclosure.

## Detailed description of preferred embodiments

In the following, the invention is described with reference to the accompanying figures in more detail. However, the present invention can also be used in other embodiments not explicitly disclosed hereafter. As detailed below, the embodiments are compatible with each other, and individual features of one embodiment may also be applied to another embodiment.

Throughout the figures and description, the same reference numerals refer to the same elements, unless stated otherwise. The figures may not be drawn to scale, and the relative size, proportions, and depiction of elements in the figures may be exaggerated for the purpose of clarity, illustration, and convenience. The figures do not limit the scope of the claims but merely support the understanding of the invention.

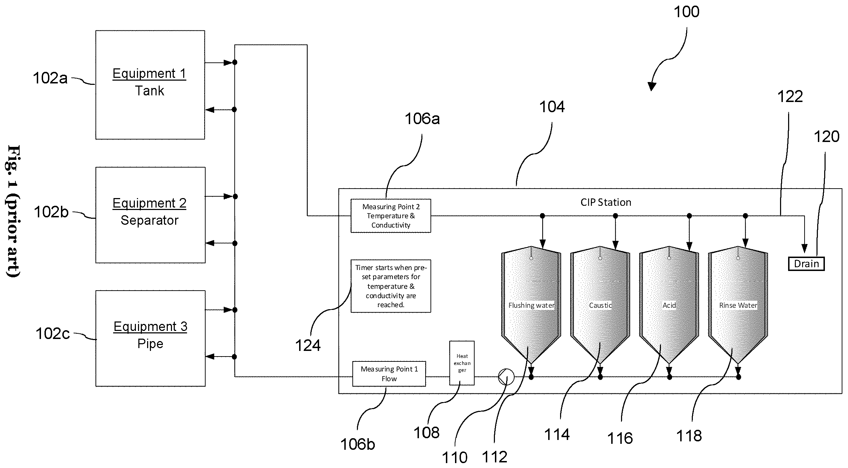

Fig. 1 illustrates a standard setup of a CIP station 104 integrated into an industrial production line 100, as for example used in the food and beverage or dairy industry. The setup comprises the CIP station 104 integrated into the industrial production line 100. The industrial production line 100 comprises three system components: a tank 102a, a centrifugal separator 102b, and piping 102c. However, the industrial production line 100 may also comprise further or other components. Typical measuring points of a CIP Station are in the feed for the flow as indicated by measuring point 106b, and in the return flow of the liquid to the CIP Station 104, which may measure temperature and conductivity as indicated by measuring point 106a. The CIP station 104 further comprises a flushing water tank 112, a caustic tank 114, an acid tank 116 and a rinse water tank 118. All tanks 112, 114, 116 and 118 are connected to measuring point 106b, preferably over a regulating device 110 (e.g., a pump) and a heat exchanger 108. During a CIP cycle 200, the content of the tanks, also known as cleaning solution or CIP solution, is pumped through the heat exchanger 108 and the regulating device 110 into the equipment 102a-c and into the pipelines of the industrial production line 100 for cleaning purpose. The content is then passed back to the CIP station via pipeline 122 and may be forwarded to the drain 120. Hence, all the components are connected by pipes forming a loop line. A timer 124 controls, when, for example, the individual content of the tanks 112, 114, 116 and 118 is pumped into the loop that connects the equipment 102a-c to the CIP station.

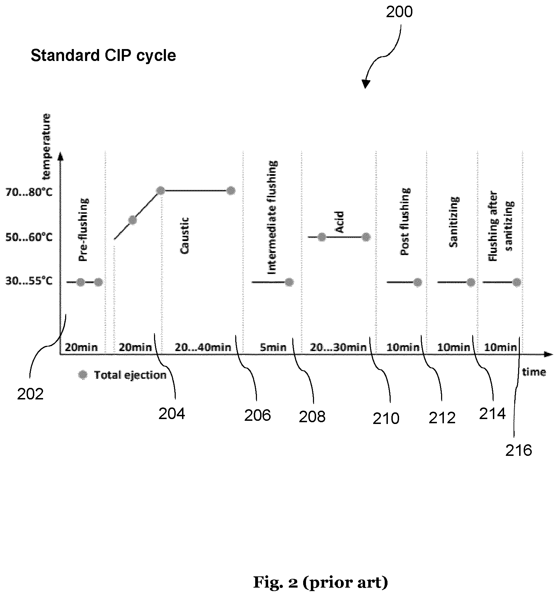

Fig. 2 illustrates a standard CIP cycle, also called CIP procedure or CIP sequence, that may be performed by CIP station 104 for a separator, like equipment 102b of industrial production line 100. The CIP Cycle 200 contains a sequence of different steps 202-216 and different cleaning agents applied during the different steps. In a pre-flushing step 202, which is typically the first step of a CIP cycle 200, the product in the pipes of the industrial production line 100 and, optionally, in the separator will be pushed out by water and major product residues are cleaned from the surface. If, for example, the industrial production line 100 is used for processing milk or milk products, in preflushing step 202, milk residue is pushed out of the industrial production line. The water used in this step typically has a temperature between 30-55 C°. The time required to perform step 202 is approximately 20 minutes.

In heating step 204, a caustic liquid is heated up, preferably up to 70-80 C°, which is typically done within 20 minutes. Then, in caustic step 206, the heated caustic liquid is pushed in the loop line. When the temperature and conductivity target is reached, a timer 124 may be started for a defined process time for the caustic step 206, which may vary between approximately 20-40 minutes. Caustic is highly alkaline and can effectively dissolve and remove organic soils, proteins, fats, and other residues commonly found in food processing equipment and pipelines. It can break down complex soils and facilitate their removal during the cleaning process.

In intermediate flushing step 208, the caustic liquid is pushed out of the loop line and of the equipment 102a-c with water. The water used in this step has preferably a temperature of 30-55 C° and takes approximately 5 minutes.

In acid step 210, an acid liquid is pushed in and run in the loop. The acid has preferably a temperature of 50-60 C°. Conducting step 210 requires approximately 20-30 minutes. In post-flushing step 212, the acid liquid is pushed out of the loop by water. The time required for this step is approximately 10 minutes, whereas the water has a temperature of preferably 30-55C°. Acidic solutions, such as nitric acid or phosphoric acid, are effective at dissolving and removing mineral deposits like calcium carbonate, calcium phosphate, and other scale formations that can accumulate on surfaces within processing equipment and pipelines. These deposits can hinder heat transfer efficiency, reduce flow rates, and harbor bacteria, so their removal is crucial for maintaining equipment performance and cleanliness.

Step 212 may be followed by sanitizing step 214. In which a disinfection liquid is pushed in and run in the loop. The disinfection liquid has a temperature preferably of 30-55 C° and the time required for carrying out this step is approximately 10 minutes. Sanitizing helps to eliminate or reduce microbial populations on surfaces, preventing microbial contamination of subsequent batches of product. This is particularly important in industries such as food and beverage processing, pharmaceuticals, and healthcare where maintaining hygienic conditions is critical to product safety and quality.

After step 214 a flushing-after-sanitization step 216 may be performed. During this step, the disinfection liquid is pushed out of the loop, preferably by water with a temperature of preferably 30-55C°. The time for performing this step is preferably 10 minutes.

Depending on the product processed in the industrial production line 100 and/or depending on the specific setup of the industrial production line 100, different variations of the CIP cycle 200 may be carried out. This is because one product may require a longer and more intensive cleaning, whereas another product may require shorter cleaning sequences. Individual steps of CIP cycle 200 may also be skipped or circumvented. Hence, the cleaning procedure conducted by CIP cycle 200 is a dynamic process which may vary and change.

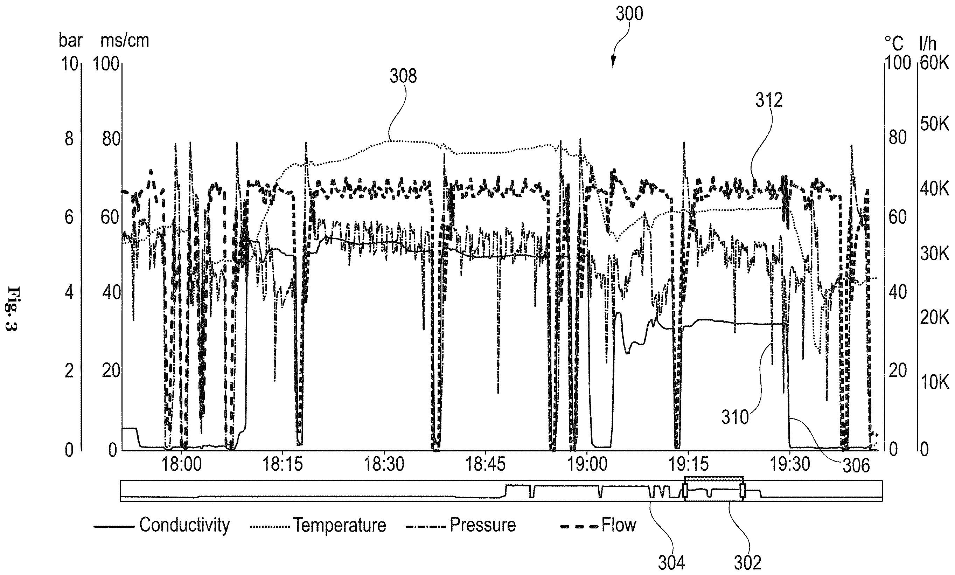

Fig. 3 illustrates a diagram 300 of parameters produced during a CIP cycle 200 of an industrial production line 100. The curves 306, 308, 310 and 312 indicate the behavior of the corresponding parameters recorded during slot 302 of the complete parameter recording 304. Hence, the diagram 300 depicts only a time extract of a complete parameter measurement.

Curve 306 indicates the progression of the conductivity in slot 302, which may for example be measured at measurement point 106a of CIP station 104. Conductivity measurement is used to monitor the concentration of cleaning agents and the level of contamination in the cleaning solution. During the CIP cycle 200, conductivity should decrease as contaminants are removed from the equipment and diluted in the cleaning solution. A significant decrease in conductivity indicates effective cleaning. Conversely, a constant or increasing conductivity level suggests incomplete cleaning or insufficient dilution of cleaning agents, which can compromise product quality and equipment hygiene.

Curve 308 indicates the progression of the temperature in slot 302, which may for example be measured at measurement point 106a of CIP station 104. Temperature monitoring ensures that the cleaning solution reaches the desired temperature and maintains it throughout the CIP cycle 200. Deviations from the specified temperature range can indicate issues such as inadequate heating equipment, insufficient contact time, or improper mixing of cleaning chemicals.

Curve 310 indicates the progression of the pressure in slot 302, which may for example be measured at measurement point 106b of CIP station 104. Pressure monitoring helps ensure proper distribution and circulation of the cleaning solution throughout the equipment. Adequate pressure is necessary to dislodge and remove contaminants from surfaces effectively. Insufficient pressure may result in areas with poor cleaning coverage, leading to microbial growth or product contamination. Monitoring pressure variations during the CIP cycle 200can identify potential blockages, leaks, or equipment malfunctions that could impede the cleaning process and compromise the quality of the final product.

Curve 312 indicates the progression of the flow in slot 302, which may for example be measured at measurement point 106b of CIP station 104. Flow rate measurement is essential for assessing the efficiency of cleaning solution delivery and drainage during the CIP cycle 200. Consistent flow rates indicate uniform distribution of the cleaning solution, ensuring thorough cleaning of all equipment surfaces. Fluctuations or interruptions in flow may indicate blockages, valve or regulating device malfunctions, or insufficient pump capacity, which can hinder the cleaning process and compromise product quality.

The values of the aforementioned parameters of a typical CIP cycle 200 are thus not constant and will change during the individual steps 202, 204, 206, 208, 210, 212 and 214.

To evaluate the cleaning quality of a CIP cycle 200 on individual equipment level, e.g. for one of equipment 102a.c, it is necessary to perform an equipment-dependent analysis of the cleaning steps 202, 204, 206, 208, 210, 212 and 214 required for the specific equipment 102a-c. Examples of equipment specific cleaning steps for a centrifugal separator are ejections, overflow, spray ball, bowl bottom flush, and discharge pressure.

Ejections: The ejection during a cleaning process cleans the disks of the product deposits. Also, the CIP Liquid will be cleaned.

Overflow: With the overflow, the centripetal pump chamber of the separator is overflowing which leads to a cleaning of the complete centripetal pump chamber and the outside of the separator bowl. In this step, the discharge pressure reaches its limit for a few seconds.

Spray ball: The spray ball is a cleaning device in the solid vessel. It will be active for a short period of time between the ejections.

Bowl bottom flush: The spray nozzle will be active for a short period of time between the ejections.

Discharge pressure: for a proper covering of the centripetal pumps, the discharge pressure of the discharge liquids is controlled to secure a proper cleaning.

To properly analyze the cleaning quality of the separator, specific sensor readings from the separator are recorded and analyzed. Examples of parameters used for CIP quality analysis of a separator may consist of motor current, bowl speed, total ejection/partial ejection, and vibration.

Motor current is an indicator of the power consumption and load on the separator's motor during operation. Abnormal increases in motor current during the CIP cycle 200 may indicate issues such as excessive friction, improper alignment, or the presence of solid residues causing increased resistance. Monitoring motor current can help detect potential mechanical problems or insufficient cleaning, ensuring that the separator operates efficiently and reliably after the CIP cycle 200.

Bowl speed refers to the rotational speed of the centrifugal bowl in the separator. Maintaining the correct bowl speed during the CIP cycle 200 is essential for effective separation of solids and liquids and efficient cleaning. Deviations from the specified bowl speed can affect separation efficiency and cleaning effectiveness. Monitoring bowl speed ensures that the separator operates within the optimal range, facilitating thorough cleaning and preventing damage to the equipment.

Ejection refers to the discharge of separated solids or liquids from the separator. Total ejection involves complete removal of accumulated solids or separated phases from the separator, while partial ejection may leave behind residual contaminants. Monitoring ejection characteristics during the CIP cycle 200 ensures that the separator effectively removes all contaminants and residues, preventing cross-contamination and maintaining product quality. Inadequate ejection or incomplete removal of solids may indicate insufficient cleaning or operational issues, requiring adjustments to the CIP process parameters.

Vibration monitoring helps detect mechanical problems, such as misalignment, imbalance, or bearing wear, which can affect the separator's performance and reliability. Excessive vibration during the CIP cycle 200 may indicate issues with the rotating components or the overall structural integrity of the separator. Monitoring vibration levels helps identify potential maintenance needs or operational issues that could compromise the quality of the CIP process or the performance of the separator.

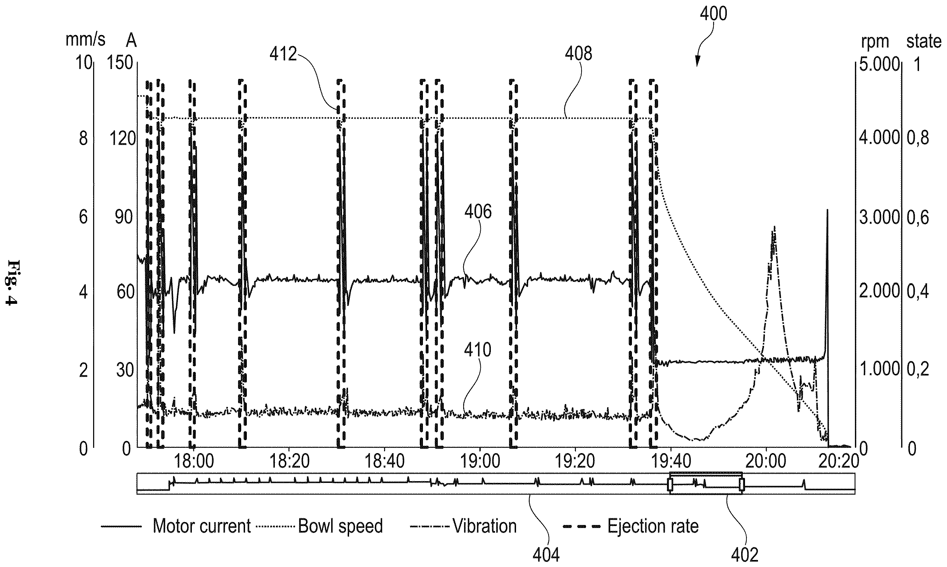

Fig. 4 illustrates a diagram 400 of parameters produced during a CIP cycle of a separation device (e.g., a separator or decanter). The depicted curves, 406, 408, 410 and 412 indicate parameter values recorded in slot 402 of the complete parameter recording 404. Curve 406 indicates the progression of the motor current in slot 402, which may for example be measured with a sensor arranged in a decanter or separator, like equipment 102b of industrial production line 100. Curve 408 indicates the progression of the bowl speed in slot 402, which may for example be measured with a sensor arranged in a decanter or separator, like equipment 102b of industrial production line 100. Curve 410 indicates the progression of the vibration in slot 402, which may for example be measured with a sensor arranged in a decanter or separator, like equipment 102b of industrial production line 100. Curve 412 indicates the progression of the ejection rate in slot 402, which may for example be measured with a sensor arranged in a decanter or separator, like equipment 102b of industrial production line 100.

As can be seen from Fig. 4, the curves 406, 408 and 410, indicating the motor current, the bowl speed and the vibration, respectively, are almost constant and only significantly change or vary during an ejection.

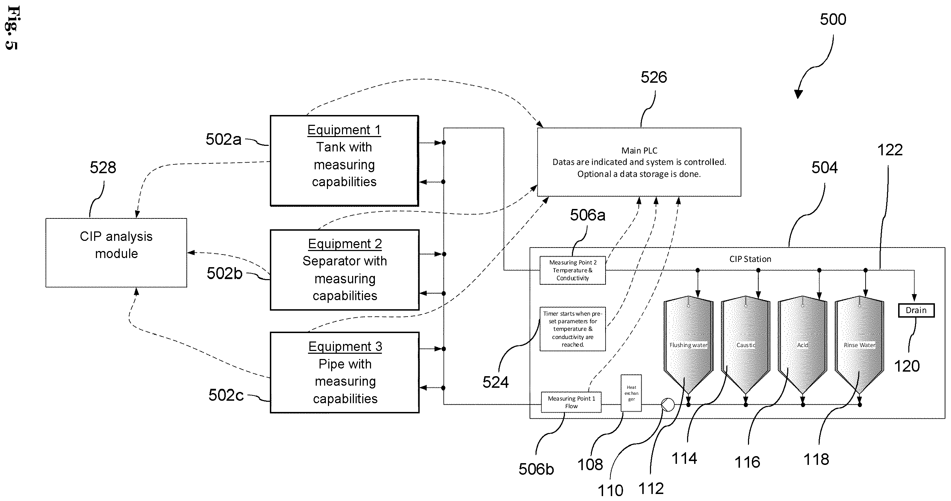

Fig. 5 illustrates a structure of an industrial production line 500 including equipment 502a-c, a CIP station 504 including measurement points 506a-b, a regulating device 110, a heat exchanger 108, tanks 112, 114, 116, 118 and a CIP analysis module 528 as well as a main programmable logic controller (PLC) 526 according to aspects of the present disclosure. Compared to industrial production line 100, the equipment 502a-c comprise measurement capabilities, e.g. in terms of sensors, that allow to measure equipment specific parameters, like temperature, conductivity, and flow. If the equipment 502a-c is a decanter or separator, the equipment specific parameters may additionally or alternatively comprise bowl speed, motor current, ejection rate and vibration. It is apparent for the skilled reader that, dependent on the equipment type, further parameters may be measured. Like measurement points 106a-b, measurement points 506a-b may measure parameters of the CIP station 504, like temperature, conductivity, pressure, and flow. The functionality of timer 524 generally corresponds to the functionality of timer 124. The additional equipment specific measurements are collected and stored together with the standard CIP measurements from the CIP cycle 200.

Across production lines in the food and beverage industry multiple different configurations of CIP cycles 200 may be chosen, depending on the degree of fouling of the units of the industrial production line 500, cleaning need and the runtime of the specific equipment 502a-c, e.g. a separator, heat exchanger or evaporation plant. Consequently, pre-defined CIP cycles can be chosen by the main PLC 526, which differ mainly in the number of cleaning solutions used and the time the total CIP cycle 200 is running. Furthermore, the length of the individual steps 202-216 may vary between different configurations of a CIP cycle 200.

To determine the quality, e.g. the cleaning effectiveness, of a CIP cycle 200, a detailed analysis and evaluation of a CIP cycle 200 is required. Every cleaning step 202-216 may be required to be analyzed individually. Additionally, it may be advantageous to record and analyze general CIP cycle characteristics provided from the CIP Sation 500 in combination with equipment specific measurements.

Therefore, one or more processors may be operably connected to both the equipment 502a-c and the CIP station 504 and configured to run a software configured to obtain sensor data and perform the necessary data analysis. This may be done by CIP analysis module 600, preferably in conjunction with main PLC 526.

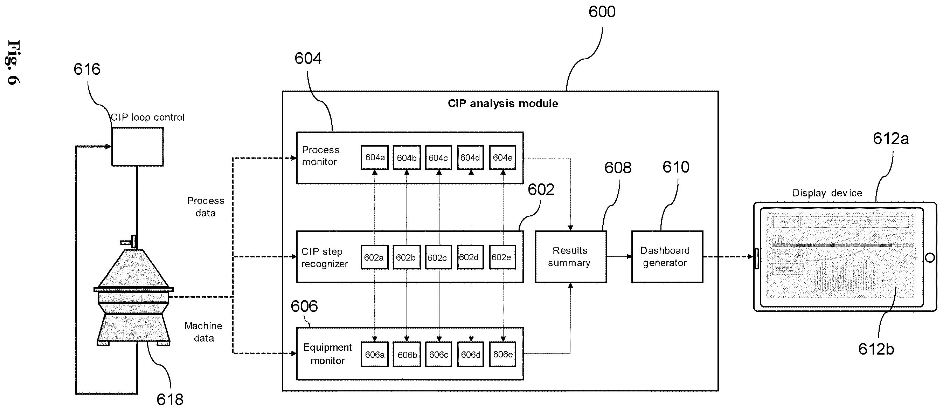

Fig. 6 illustrates a detailed view of CIP analysis module 600, a display device 612a displaying a dashboard 612b, and an equipment 618 connected to a CIP loop control 616 according to aspects of the present disclosure. The CIP analysis module 600 is preferably realized in software, hardware, or a combination thereof. CIP analysis module 600 may comprise three main components: a CIP step recognizer 602, a process monitor 604, and an equipment monitor 606.

The CIP step recognizer 602 identifies the current step 202-216 of a CIP cycle 200 by means of CIP step identifiers 602a-e and orchestrates the execution of suitable machine learning models 604a-e, 606a-e. The identification of the current CIP step 202-216 may be done by the CIP step identifiers 602a-e via data exchange with the main PLC 526. Hence, the main PLC 526 may simply communicate to the CIP analysis module 526 which CIP step 202-216 is presently active. Alternatively, the current CIP step 202-216 may be determined by the CIP step identifiers 602a-e of CIP step recognizer 602 using sensor values indicating the temperature and conductivity, which may for example be provided by a measuring point 106a, 506a of the used CIP station 104, 504. This is possible since each CIP step 202-216 typically operates with a different temperature and conductivity range. Based on these values, the selection of the desired model(s) could be steered, too.

Alternatively, the CIP step identifiers 602a-e of CIP step recognizer 602 may identify a plurality of pre-configured CIP cycle variations. In this case, a CIP step 202-216 may be understood as complete or partial CIP cycle 200. This process may be performed as a batch analysis process, as the entire CIP cycle 200 needs to be finished before the analysis can be performed.

The process monitor 604 may comprise a plurality of trained process-specific machine learning model 604a-e, at least one for each different type of CIP step 202-216. The trained process-specific machine learning model 604a-e are trained for the overall process data and are not equipment specific. The execution of the trained process-specific machine learning models 604a-e is triggered from the CIP step recognizer 602. Hence, the CIP step recognizer 602 selects an appropriate trained process-specific machine learning model 604a-e for each identified CIP step 202-216.

Process data, e.g. obtained from measuring points 106a-b, 506a-b and/or process data obtained from the measurement capabilities of equipment 502a-c is received by each of the selected trained process-specific machine learning models 604a-e. Based on this information, the trained process-specific machine learning models 604a-e perform a prediction to determine the cleaning quality of the individual CIP steps 202-216 and thus also of the complete CIP cycle 200.

Equipment monitor 606 comprises a plurality of trained equipment-specific machine learning models 606a-e, at least one per CIP step 202-216. The different trained equipment-specific machine learning models 606a-e are specialized for the anomaly detection of the equipment process. A trained equipment-specific machine learning model 606a-e may, for example, have been trained to be used in conjunction with separators, whereas other trained equipment-specific machine learning models 606a-e may have been trained for being used with tanks or other device types. The selection and execution of the trained equipment-specific machine learning models 606a-e is triggered by the CIP step recognizer 602. Process data, e.g. obtained from measuring points 106a-b, 506a-b and/or process data obtained from the measurement capabilities of equipment 502a-c is received by each of the selected trained equipment-specific machine learning models 606a-e. Based on this information, the trained equipment-specific machine learning models 606a-e perform a prediction to determine the cleaning quality of the individual CIP steps 202-216 and thus also of the complete CIP cycle 200.

The plurality of trained process and equipment specific machine learning models 604a-e, 606a-e in both the process monitor 604 and the equipment monitor 606 are reflecting either a complete or a partial CIP cycle 200 identified by the CIP step recognizer 602. A plurality of different CIP cycle configurations may be constructed and the trained models 604a-e, 606a-e may have been trained for at least one of these configurations. The following listing depicts three models that have been trained for a standard CIP cycle 200, a short CIP cycle and a special CIP cycle that differ in the conducted CIP steps:

-

$$\text{Model 1 (Standard)} = \text{Water} - \text{Caustic} - \text{Water} - \text{Acid} - \text{Water}$$

-

$$\text{Model 2 (Short)} = \text{Water} - \text{Caustic} - \text{Water}$$

-

$$\text{Model 3 (Special)} = \text{Water} - \text{Acid} - \text{Water} - \text{Caustic} - \text{Water}$$

Alternatively, the CIP step recognizer 602 is configured to treat the individual steps 202-216 in the CIP cycle 200 individually. Sensor input data may be prepared by the CIP step recognizer 602 according to each step 202-216 and tagged to define the single steps, like flushing and caustic. In this case, each of the trained process and equipment specific machine learning models 604a-e, 606a-e relate to one specific CIP step 202-216 (and not to a complete CIP cycle 200 as outlined above) and have been trained accordingly.

CIP step recognizer 602 may automatically choose the best fitting model for a CIP step 202-216 using its CIP step identifiers 602a-e. Hence, the CIP analysis module 600 may be adapted to any variation of the applied CIP cycle 200 in a specific production context.

Accordingly, the CIP step recognizer 602 identifies via its CIP step identifiers 602a-e a CIP step 202-216 or a sequence of CIP steps 202-216 of a CIP cycle 200 and communicates this information to both the process monitor 604 and to equipment monitor 606. Based on the information, the process monitor 604 selects a properly trained process-specific machine learning model 604a-e, one per CIP step 202-216 or one per sequence of CIP steps 202-216.

The same information is also communicated to the equipment monitor 606. Based on the information, the equipment monitor 604 selects an properly trained equipment-specific machine learning model 606a-e, one per CIP step 202-216 or one per sequence of CIP steps 202-216.

During operation, the process monitor 604 and the equipment monitor 606 obtain operation data of the CIP station 504 and from equipment 502a-c, 618 of the industrial production line 500. The operation data may refer to an individual CIP step 202-216 or to a sequence of CIP steps 202-216. For each CIP step 202-216 or for each sequence of CIP steps 202-216, the operation data is passed to the corresponding trained model 604a-e, 606a-e of the process monitor 604 and of the equipment monitor 606. The operation data may comprise parameters as discussed with respect to Figs. 3 and 4. Based on the operation data, each of the models 604a-e, 606a-e performs a prediction to indicate the execution quality of the corresponding CIP step 202-216 of the sequence of CIP steps 22-216. The quality indicates how well each step 202-216 or sequence was executed.

The prediction results of all machine learning models 604a-e, 606a-e are summarized through different methods like the ensemble learning method bagging, which may be performed by results summary module 608. The results may be forwarded to dashboard generator module 610 to be visualized in a dashboard 612b displayed on a display device 612a for the user.

To predict the quality, an anomaly detection analysis may be performed by the plurality of the trained machine learning models 604a-e, 606a-e of the process monitor 604 and of the equipment monitor 606. As an input, as outlined above with respect to Figs. 3 and 4, the trained process-specific machine learning models 604a-e may obtain the sensor data of conductivity, temperature, discharge pressure and flow. These parameters allow to recognize anomalies in a CIP step 202-216 or in a sequence of CIP steps 202-216. Likewise, the trained equipment-specific machine learning models 606a-e of the equipment monitor 606 may obtain parameters like bowl speed, motor current, vibration and total ejection of a corresponding equipment 502a-c, 618. These parameters allow to recognize anomalies in a CIP step 202-216 or in a sequence of CIP steps 202-216.

All the aforementioned parameters may be provided by corresponding sensors of the CIP station 500 and/or of the equipment 502a-c, 618 with a minimal sampling rate of one second. The parameters may be buffered during the duration of the CIP procedure, such that a complete data set is provided the CIP analysis module 600 as a batch data analysis process. Alternatively, the data may be provided to the CIP analysis module 600 in semi real-time when the CIP cycle 200 may change state or phase. Then, the data associated with the previous phase is passed to the CIP analysis module 600.

The parameters of each CIP cycle 200 may be stored in a sequence named with a unique identification (ID) number. The trained machine learning model may generate an aggregate quality score at the end of a complete CIP cycle 200. The quality may be expressed in terms of an anomaly score. Examples of aggregated anomaly scores and the corresponding cleaning quality interpretation may look like as follows:

- 0-20%: CIP cycle 200 was executed in good condition.

- 21-70%: Performance of CIP cycle 200 has to be checked.

- 71-100%: CIP cycle 200 has to be repeated.

Suitable examples of algorithms that may act as the basis for the machine learning models 604a-e, 606a-e are Support Vector Machines, Optimized Support Vector Machines, Random Forests, Optimized Random Forests, Nearest Neighbors, Optimized Nearest Neighbors, Autoencoders or Self Organizing Maps (SOMs).

A support vector machine (SVM) is a supervised learning algorithm used for classification and regression tasks. It finds the optimal hyperplane that best separates different classes in the feature space, maximizing the margin between the classes. An optimized support vector machine refers to enhancements made to traditional SVMs, such as kernel tricks, parameter tuning, and algorithmic optimizations, to improve performance in terms of accuracy, training time, and generalization to unseen data. These optimizations help SVMs handle more complex data and achieve better results in real-world applications.

Random forests are an ensemble learning method used for classification and regression tasks. They consist of a collection of decision trees trained on random subsets of the data and features. During prediction, the output of multiple trees is combined to produce a final prediction, offering robustness against overfitting and high accuracy.

Optimized random forests refer to improvements made to traditional random forests, such as tuning hyperparameters, selecting optimal feature subsets, and employing advanced tree-building techniques like bootstrapping and feature bagging. These optimizations enhance the performance, scalability, and interpretability of random forests, making them more effective in handling complex datasets and achieving better predictive accuracy.

A nearest neighbor algorithm classifies new data points based on the similarity to existing labeled data points. It assigns the label of the nearest data point(s) to the new point, making it a simple and intuitive classification method.

An optimized nearest neighbor algorithm involves strategies such as using efficient data structures like KD-trees or ball trees to speed up the search for nearest neighbors, optimizing distance metrics, and applying dimensionality reduction techniques to handle high-dimensional data. These optimizations aim to reduce computational complexity and improve the algorithm's scalability and performance, making it more suitable for large datasets and real-world applications.

An autoencoder is a type of neural network architecture used for unsupervised learning, particularly in data compression and feature learning. It consists of an encoder network that compresses the input data into a lower-dimensional representation called a latent space, and a decoder network that reconstructs the original input data from this compressed representation. By minimizing the reconstruction error, autoencoders learn to capture the most important features of the input data, enabling tasks such as dimensionality reduction, data denoising, and anomaly detection.

A SOM is a special type of neural network. A SOM consists of several neurons positioned on a grid. Each neuron contains a weight vector with the same length as the input samples and randomly initialized values. During training, each input sample is applied by calculating the nearest neuron and "pulling" the neuron in the direction of the sample.

To use SOMs for CIP cycle analysis, the different sensors of the CIP station 500 and/or of the equipment 502a-c, 618 need to be processed separately in one SOM. This approach ensures that the root cause for an anomaly can be localized regarding both the responsible sensor and a specific point in time. To train a model, the CIP cycles 200 provided for training are set to a standardized machine-depending length. This is to ensure the ability of the SOM algorithm to interpret one CIP cycle 200 as one datapoint while transferring the time axis to the SOM's dimensions. Doing so removes the absolute time axis from the analysis and enables the SOM to compare the data based on the time since the cycle started.

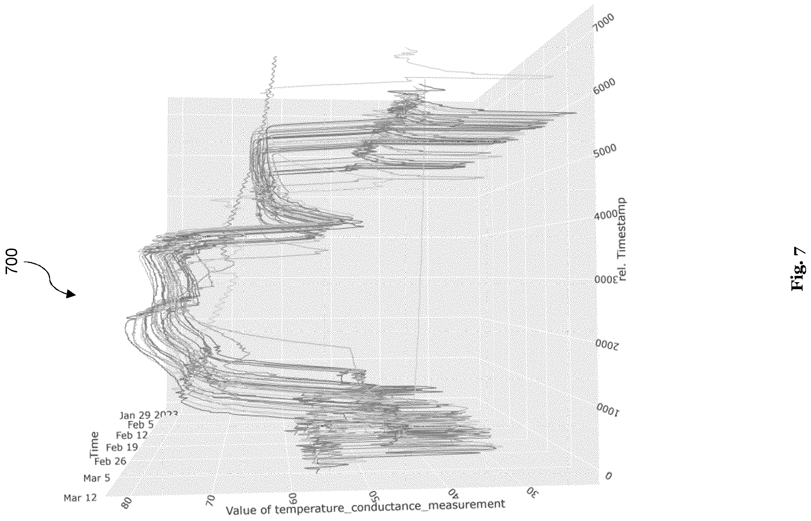

Fig. 7 shows a diagram 700 that visualizes the SOM-based approach by means of temperature conductance profiles that have been monitored over the course of several CIP cycles 200 by choosing a perspective along the absolute time axis and perpendicular to the value and relative timestamp axes. The x-axis of diagram 700 represents the relative timestamps, the y-axis of diagram 700 represents the value of the temperature conductance, and the z-axis of diagram 700 represents dates when the individual measurements have been conducted.

Choosing a SOM as machine learning algorithm has several advantages compared to the usage of other types of machine learning algorithms. First, SOM models output a high degree of details by assigning each input vector a same length vector of anomaly scores. This characteristic also enables further high-level aggregations while providing the base for fine-grained root cause analysis. One main purpose of aggregated anomaly scores is the evaluation of the quality of a certain CIP cycle 200. By aggregation the scores on a weekly basis, long-term trend analysis can be done. For aggregation over multiple consecutive CIP cycles 200, the median of the CIP's anomaly scores is used instead of the arithmetic mean in order to mitigate the effects of few outlier CIP cycles 200.

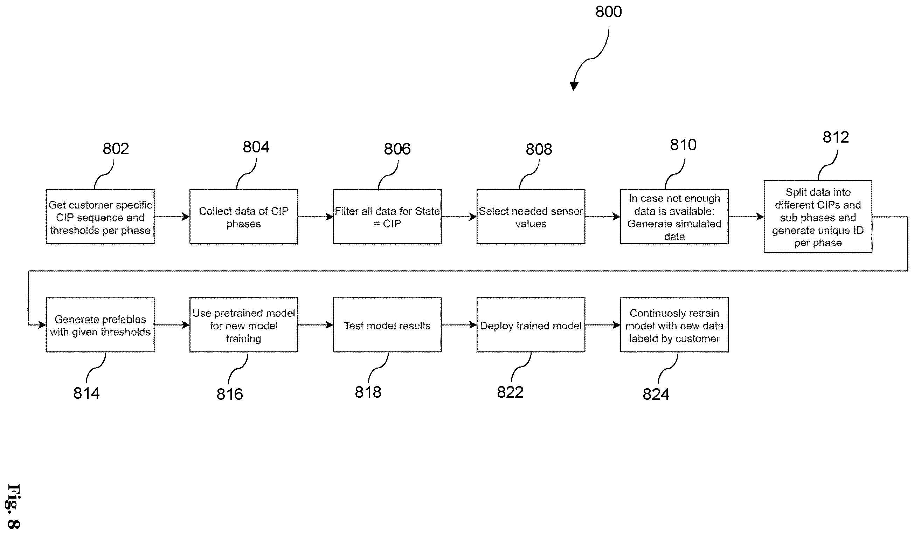

Fig. 8 illustrates a process 800 that may be used for training and deploying models. In step 802, specific configurations for CIP cycles 200 are obtained, wherein each step 202-216 of the CIP cycle 200 may have assigned specific sensor threshold values. In step 804, the configurations of the CIP cycles 200 are executed in a real industrial production line 500 that is connected to a CIP station 504. Sensor data is measured and recorded during this step to be used as training data. The training data may include following sensor values that may preferably be used for training process specific machine learning models: machine state, flow, pressure heavy phase, temperature, and conductivity. Additional sensor data for the training of equipment-specific machine learning models may be used and may comprise: bowl speed, motor current, ejection, ejection rate, and vibration.

In step 806, the obtained sensor data is filters such that sets of sensor data can be assigned to each CIP cycle 200. In step 808, the sensor data that is relevant may be selected. For example, data of sensors that are not relevant for the CIP analysis may be omitted. In step 810, which is an optional step, additional sensor data may be generated, e.g., by simulating the operation of an industrial production line 500 by way of computer simulation.

In step 812, the obtained sensor data is split to assign sensor data to the corresponding CIP cycle 200 or to the steps 202-216 of the corresponding CIP cycle 200. The sensor data may be formatted with a timestamp as timeseries data. The different time series values may be grouped in CIP batches with a unique identifier. To ensure a reliable model training, data from more than 75 CIP cycles 200 may be needed where at least 10 CIP batches can be classified as "good". The data obtained in this step is the actual training data.

In step 814, the training data may be prelabeled to reduce the effort of the model training. The pre-labels may be created with a set of threshold values defined by the customer for each CIP phase (see step 802), e.g.:

- Duration caustic phase (min/max + standard deviation)

- Temperature caustic phase (min/max + standard deviation)

- Conductivity caustic phase (min/max + standard deviation)

During the process of the training data preparation each CIP phase is checked for a threshold violation and labeled as "bad"/anomalous in case of a threshold violation.

In step 816, the actual training is performed. With these prelabeled training data, a data scientist or process expert may train a model from scratch or may further train an already pre-trained model. The specific trained models for a customer will be continuously retrained to improve their prediction quality.

In step 818, the prediction quality of the trained models may be tested, e.g., by operating the model in a simulated environment.

In step 822, the tested models may be deployed to be used in an CIP analysis module 600.

In step 824, the trained and deployed models may be continuously retrained during operation. During each CIP cycle 200, the sensor values are measured and saved. A user is asked to mark the finished CIP cycle 200 as "good" or "bad", e.g. on a human machine interface, like the display 612a. The labeled data is used for incremental retraining of the model. With this continuous retraining, more reliable prediction results can be achieved, for example if changes have been applied to the conducted CIP cycle. As an example, in case of semi real-time analyses, the system may be capable of detecting if machine-related functions have been missing during a CIP step 202-216. With this information, an equipment, e.g. a separator, can activate automatically an overflow or total discharge before allowing the system to jump into the next CIP step 202-216. This means, that a quality check of the single equipment CIP cycle 200 per CIP step 202-216 is done.

As outlined above, the created and labeled training data is used to train supervised anomaly detection machine learning models. All in all, there is a set of trained models, all specialized for another CIP step 202-216 or for a sequence of CIP steps 202-216. Per CIP step 202-216 or per sequence of CIP steps 202-216, at least two models are created, one trained process-specific machine learning model 604a-e and one trained equipment specific machine learning model 606a-e, both trained for anomaly detection. The created models are tested against a labeled test dataset and after having achieved satisfying results, the trained models 604a-e, 606a-e are transferred into the production system to continuously detect anomalies.

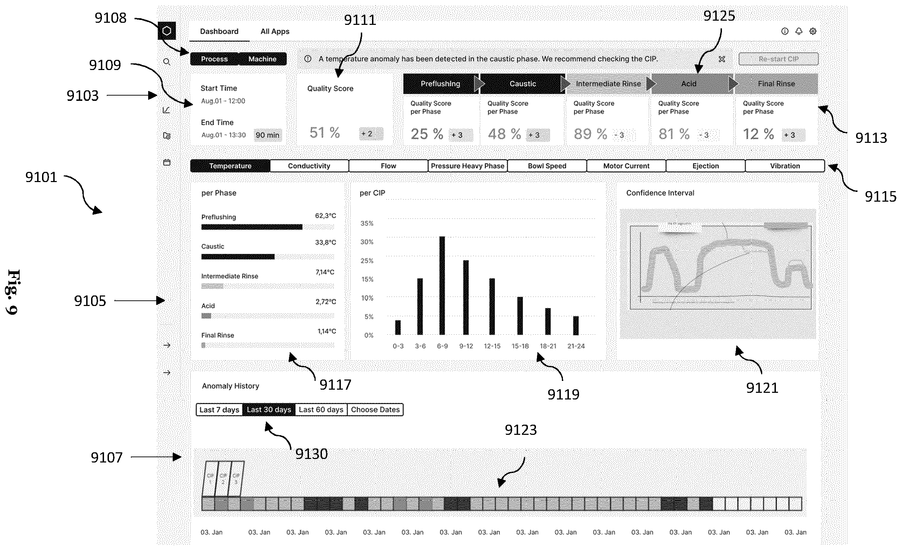

Fig. 9 shows an exemplary GUI used for analyzing, monitoring and controlling a CIP cycle 200. The exemplary GUI contains a main page 9101 and is divided into three horizontally separated sub-sections 9103, 9105, 9107. The sub-sections can be classified as a top-section 9103, a mid-section 9105 and a bottom-section 9107. The sub-sections 9103, 9105 and 9107 contain one or more interactive graphical elements (i.e., display and&or control elements) 9111, 9123, 9119 displaying information related to at least one CIP cycle 200.

The top-section 9103 contains a dashboard selection component (i.e., a control element) 9108. The dashboard selection component 9108 enables the user to interact with the GUI. More specifically, the user is able to use the dashboard selection component 9108 to switch between a first dashboard, also referred to as first view, that shows information related to the process, and a second dashboard that shows machine (i.e., equipment) specific information. For example, when analyzing a fault that occurred or when analyzing an insufficiently thorough CIP step 202-216, a user may know that this fault or insufficiently thorough CIP step 202-216 may be specific to the equipment and use the dashboard selection component 9108 to further analyze only equipment specific information. Consequently, the dashboard selection component 9108 enables the user to seamlessly switch between views. Thus, the user is provided with an increased amount of information or may drill down specific information. Moreover, the information is also provided in a more structured way which may facilitate processing of the information by the user. However, if the user wishes not to focus on either process related information or machine related information, the user can decide to summarize the information for both sub-categories as depicted in Fig. 9. This can be done by simply selecting both tabs of the dashboard selection component 9108, as shown in the top-left corner of Fig. 9.

In this way, the process specific and the equipment specific information are summarized. For example, the overall quality score 9111 and the quality score of each of the CIP steps preflushing, caustic, intermediate rinse, acid and final rinse 9113 for the process and for the machine are summarized.

Moreover, the exemplary GUI of Fig. 9 also provides the user with information about the quality of the CIP cycle. In the example the quality metric ranges from 0 to 100, however, other configurations such as a range from 0 to 1 are also possible. In both options, low quality values (e.g., between 0 to 20 or between 0 and 0.2) indicate a low quality. Mid-range values (e.g., between 21 to 60 or 0.21 to 0.6) indicate a medium quality, whereas high values (e.g., between 61 to 100 or 0.61 to 1) indicate a high quality. Moreover, a color code may be used to further emphasize the meaning of the quality metric. For example, a green color could be used for high quality values, a yellow color could be used for mid-range quality values , and a red color could be used for low quality values. In this way, a user is able to intuitively interpret the meaning of the quality values without having to recognize and/or interpret the exact value.

Finally, as seen in the top left-hand corner of Fig. 9, the top-section 9103 further contains a start-and-end indicator element 9109. The element provides the user with general information about the start and the end time of the CIP cycle 200. In this exemplary GUI, the start time consists of indicating a date including the month and the day of the month and a time including the hours and minutes. A different configuration of displaying start time and end time can be used. As seen in Fig. 9, the exemplary CIP process started on August 1$^{st}$ at 12:00 and ended on August 1$^{st}$ at 13:30. The start-end indicator element further provides information about the total duration of the CIP cycle 200. The exemplary GUI shows that the CIP cycle 200 lasted for 90 minutes. Similar to the start time and end time, a different configuration for indicating the duration may be used. Moreover, the information that is displayed in the start-and-end indicator element 9109 may dynamically change according to the activation of other display elements or control elements. Although not shown in Fig. 9, the start-and-end indicator element 9109 may also show the CIP identification number. This enables the user to distinguish between different CIP cycles and may be advantageous in further analysis, monitoring and controlling.

As mentioned above, the exemplary GUI also contains a mid-section 9105. As can be seen in Fig. 9, the mid-section 9105 is divided into four further sub-section 9115, 9117, 9119, 9121. Three of those sub-sections can be classified as display elements 9117, 9119, 9121 that visualize information and provide it to the user, while the sub-section 9115 can be classified as a control element that is used to control the content of the display elements that are shown to the user. It is noted that both types of elements are crucial to aid the user and improve the analysis, monitoring and controlling of the CIP cycle 200. Further, the content of the display elements 9117, 9119, 9121 may also be adjusted by clicking on one of the CIP steps 202-216 (i.e., preflushing, caustic, intermediate rinse, acid, final rinse) of element 9113. For example, if the user wishes to obtain more information about the intermediate rinse step of the CIP cycle 200, the user may click the intermediate rinse step on element 9113 which causes the display elements 9117, 9119, 9121 to change their content. In particular, the display elements 9117, 9119, 9121 now show information that is only associated with the intermediate rinse step of the CIP cycle 200.

As shown in Fig. 9, the control element 9115, also referred to as parameter selection element, is divided into a total of eight sub-taps indicating different parameters. The specific parameters that are illustrated in Fig. 9 are temperature, conductivity, flow, pressure heavy phase, bowl speed, motor current, ejection and vibration related to both the process and/or equipment. Note that a different kind and a different number of parameters could be used and that the specific number and kind of parameters are only shown for illustrative purposes. The user can click on one of the sub-taps of the parameter selection element 9115 to select one of the parameters. Once the user has selected a specific parameter by clicking on the sub-tap of the parameter selection element 9115, the display elements 9117, 9119, 9121 display content pertaining to the specific parameter.

For example, a user might have noticed that the quality metric is not as desired and starts looking for a possible error. The user might already know that the error is related to a faulty temperature. To check the assumption, the user selects the temperature sub-tap of the parameter selection element 9117 to have a closer look at the temperature related data. At this moment, the GUI is displaying information specific to the temperature to the user and the user is able to confirm or reject the assumption about the temperature being the culprit for the error. Further, the parameter selection element 9117 is not just helpful in cases where the user might already have a hunch about the source of the error but may also help in general error discovery. Given the previous example, if the user had not known that an error in the temperature might be the reason for the error, the user could have used the parameter selection element 9117 to examine various parameters and quickly identify the source of the problem. In this case, the GUI aid in providing a brief and informative overview of rather complex information.

While the parameter selection element 9115 enables the user to control certain aspects of the GUI, the display elements 9117, 9119, 9121 display the selected information to the user in an intuitive and informative manner.

More specifically, the first display element 9117 is focused on providing an overview of the selected parameter with regards to the different CIP steps 202-216 of the CIP cycle 200. For example, in Fig. 9, the user has selected temperature on the parameter selection element 9115. Thus, the first display element 9117 provides information about the temperature per CIP step 202-216 of the CIP cycle 200. More specifically, each CIP step 202-216 is mentioned and a diagram is shown that displays the average temperature value for each CIP step 202-216. With regards to Fig. 9, the preflushing CIP step had an average temperature of 62,3°C, the caustic CIP step had an average temperature of 33,8°C, the intermediate rinse CIP step had an average temperature of 71,4°C, the acid CIP step had an average temperature of 2,72°C and the final rinse CIP step had an average temperature of 1,14°C. The first display element 9117 may also show the range of the last CIP cycles to provide the user with more detailed information. Note that it was described above that the user may click on one of the CIP steps 202-216 of the CIP cycle 200, such as the intermediate rinse step, and the display elements 9117, 9119, 9121 would adjust accordingly to only display information pertaining to the specific CIP step 202-216. If this is the case and the user has selected a specific CIP step 202-216, the remaining phases that are displayed in the first display element 9117 are greyed out. For example, if the user had selected the intermediate rinse step, information pertaining to the preflushing, caustic, acid and final rinse steps would be greyed out in the first display element 9117.

Further, the second display element 9119 focuses on providing the user with information related to the quality of a predefined amount of preceding CIP cycles 200. This provides the user with an overview of how the quality of the CIP cycles changes from one CIP cycle to another and further enables the user to identify large-scale trends (e.g., down-ward or upward trend). For example, in Fig. 9 the second display element 9119 shows quality information of the past 24 CIP cycles. Note that the second display element 9119 does not show the quality information for each CIP cycle 200 but rather summarizes groups of three CIP cycles 200 (i.e., CIP cycle 1 to 3 = first group, CIP cycle 4 to 7 = second group etc.). This emphasizes that the second display element 9119 focusses on larger quality trends of the CIP cycles 200. Moreover, as shown in Fig. 9, based on the information provided by the second display element 9119 the user can recognize a continuous down-ward trend in the quality of the CIP cycles starting at the 9-12 CIP cycle group. The user can further see that the quality of the CIP cycle peaked in the 6-9 CIP cycle group. Another conclusion that the user might draw from the exemplary second display element 9119 of Fig. 9 is that the quality of the CIP cycles 200 is plateauing around the 18-21 CIP cycle group after drastically decreasing between the 6-9 CIP cycle group and the 15-18 CIP cycle group. Consequently, the user might conclude that there is a systematic error that keeps impacting the quality of the CIP cycles 200 over a prolonged period of time.

Accordingly, while the first display element 9117 focuses on the fine-grained information such as temperature per CIP step 202-216, the second display element 9119 provides rather large-scale information about a group of entire CIP cycles 200. Note that the combination of the various display elements 9117, 9119, 9121 provides the user with an effective tool for analyzing, monitoring and controlling the CIP cycle 200.

Similar to the second display element 9119, the third display element 9121 is also focused on showing information over a period of time. However, while the second display element 9119 shows the change of quality of the CIP cycle 200 per CIP cycle 200 without considering a specific time frame, the third display element 9121 shows a specific parameter of a predefined time span, such as several hours or minutes. Therefore, the second display element 9119 is well suited to identify large-scale trends over a prolonged period of time. In contrast, the third display element 9121 enables the user to pinpoint the exact time a specific irregularity occurred. This may be advantageous during problem identification. Additionally, the third display element 9121 also displays a confidence interval of the displayed parameter over time. This may provide the user with even more information and may lead to better reaction time by the user.

In summary, through the parameter selection element 9115, the mid-section 9105 provides the user with the option to further analyze specific parameters such as temperature, conductivity and motor current. The three display elements 9117, 9119, 9121 provide an advantageous combination of different kinds of information to the user. While the first display element 9117 focusses on providing parameter information per CIP step 202-216 of the CIP cycle 200, the second display element 9119 enables the user to identify large-scale trends (e.g., down-ward trend in quality of the CIP cycle 200). The third display element 9121 complements the first display element 9117 and the second display element 9119 by showing specific parameter data over a period of time and enabling the user to pinpoint exact moments in time.

As shown in Fig. 9, the bottom-section 9107 is located right below the mid-section 9105 and comprises a time range selection element 9130 and a CIP cycle history element 9123. Similar to the parameter selection element discussed above in relation to the mid-section 9105, the time range selection element 9130 comprises several sub-tabs. Once the user has selected a specific sub-tap, the content of the CIP cycle history element 9123 changes accordingly. For example, in Fig. 9, the time range selection element 9130 has a total of four sub-tabs - "last 7 days", "last 30 days", "last 60 days" and "choose dates". If the user selects, for example, "last 30 days", the CIP cycle history element 9130 shows the average CIP cycle quality per day in form of a color code. Red might identify that the quality of a CIP cycles is not acceptable and green might identify that the quality of the CIP cycles is good, whereas yellow might indicate that the CIP quality performance was only partially acceptable. The user is also able to adjust the color coding of the display. Note that the "choose dates sub-tab" also provides the user with the option to define a specific time frame of interest. This might be advantageous during analysis of a CIP cycle 200. Moreover, if the user is interested in further analyzing a specific CIP cycle 200, the user may click on the ID of that CIP cycle and receive more detailed information.

Moreover, although not shown in Fig. 9, the exemplary GUI might be equipped with interactive buttons that trigger a reporting functionality such as the creation of report about specific parameters, e.g., in form of a PDF document. Moreover, the GUI might enable a user to save the PDF report document and send the PDF report document, for example via e-mail, to share information with other users. There are various types of reports that may be created. An example of a report is a daily report that may be created and saved to a designated folder automatically. A further example of a report that may be generated based on the information that is displayed on the exemplary GUI of Fig. 9 is a monthly summary report. Such a monthly summary report may, for example, provide an overview about predefined parameters.

A further functionality provided by the GUI are advanced setting options that may enable the user to adjust various values that influence the GUI. Examples of such values are alarm settings, pre-settings for color changes and pre-setting for reporting functions. As mentioned in reference to the bottom-section 9107, the CIP cycle history element 9123 uses colors to identify the quality of the CIP cycle 200. An intuitive option is, for example, to assign the color red to a low-quality score and the color green to a high-quality score. Advanced settings can be used to indicate specific color choices. A customer might for example choose a more granular color distribution (i.e., dark red, red, light red). With regards to reporting functionality, advanced settings may be used to indicate that a monthly report should be created and to further indicate which information should be included in the monthly report. As mentioned previously, reports may also be sent automatically, for example via e-mail. Thus, a further preconfiguration might be to identify one or more recipients that the report should automatically be sent to. Finally, alarms can be preconfigured in the advanced settings of the GUI. A user may specify which action should trigger which kind of alarm. For example, a user may determine that a specific alarm should be triggered if the temperature of one of the CIP steps 202-216 of the CIP cycle 200 exceeds a predefined value. With regards to alarms, the GUI also provides an alarm buffer that is used to control and react to alarms that occurred during a specific CIP cycle 200.

Moreover, the GUI may have the additional functionality of providing operational advice. For example, if a deviation from a predefined value or an outright failure is identified, the GUI may provide operational advice that guides the user through the process of finding the cause of the deviation and/or the failure. Examples for such advices that are provided to the user through the GUI are *"check steam regulation valves when temperature is low" and "check feed pump / valve position when feed flow is too low"*.

Apart from the operational advice, the GUI may also provide the user with recommendations of possible root causes, solutions to work on and possible problems caused by the error. For example, the GUI may inform the user that an increased temperature in the caustics CIP step 202-216 of the CIP cycle 200 may lead to problems with the residuals. The GUI may further provide the user with recommendations regarding a possible restart of the CIP cycle based on analyzed CIP cycle data and quality scores. For example, if a CIP cycle was not executed as expected (e.g., the quality score was below a predefined value). Fig. 9 demonstrates such a warning in a notification display element 9125 as *"A temperature anomaly has been detected in the caustic phase. We recommend checking the CIP."*. The GUI may also indicate the specific CIP step 202-216 of the CIP cycle 200 that should be further analyzed. The CIP cycle 200 may then be restarted from the GUI, e.g., through the operation of a button. Moreover, if the overall quality of the CIP cycle 200 was sufficient but one or more CIP steps 202-216 of the CIP cycle 200 were not successful, a shorter CIP cycle 200 may be initiated. For example, if the preflushing step and the caustic step showed a good quality but the maximum temperature during the acid step was not reached, a short CIP cycle consisting of a preflushing CIP step 202-216, followed by an acid CIP step and a final rinse CIP step may be executed. Moreover, to avoid that the equipment is used without first performing an adequate CIP cycle 200, the GUI may block the initiation of a production run and force an adequate CIP cycle 200. The adequacy of a CIP cycle 200 may for example be defined through a CIP cycle quality score that may be adjusted according to the requirements of the specific user. In case a user requires a strict CIP regime, the CIP cycle quality score at which a repeat CIP cycle 200 is triggered might be lower.

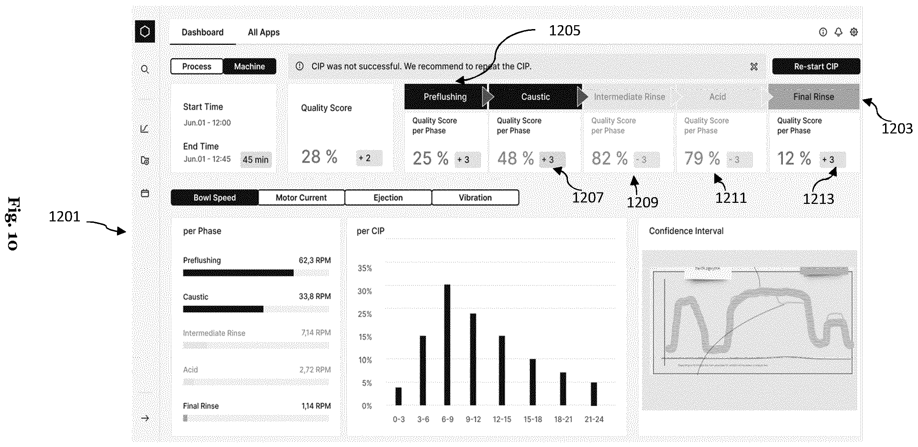

Fig. 10 shows a further exemplary GUI used for analyzing, monitoring and controlling a CIP cycle 200. The GUI shown in Fig. 10 is similar to that shown in Fig. 9 in that it contains a main page 1201. However, in contrast to Fig. 9, Fig. 10 merely shows the top-section and the mid-section of the main page 1201.

The top-section of the main page 1201 of Figure 10 comprises the same elements as the top-section of the main page 9101 of Figure 9. A difference can be seen in the start-and-end indicator element which shows that the CIP cycle 200 started on June 1st at 12:00 and ended on June 1st at 12:45 with a total running time indicated as 45 minutes. Moreover, in contrast to Fig. 9 where both the process sub-tab and the machine sub-tab were selected from the control element 9108, in Fig. 10 only the machine sub-tab is selected from the corresponding control element. As described above, selecting the machine (i.e., equipment) sub-tab changes the content of the display elements to reflect information associated with the machines involved in the CIP cycle 200 (e.g., an industrial separator). Accordingly, the information that is displayed in Fig. 10 is not related to the process itself but merely to the equipment. This is advantageous in case the user wants to focus on analyzing information regarding the equipment. More specifically, the functionality displaying a specific part of the available information alleviate the user from receiving too much information and might facilitated error analysis.

Further, in contrast to Fig. 9 where all CIP steps 202-216 of the CIP cycle 200 displayed in the CIP cycle element are selected, in Fig. 10 it can be seen that merely the preflushing CIP step 1205, the caustic CIP step 1207 and the final rinse CIP step 1213 are selected in the CIP cycle element 1203. Accordingly, the intermediate rinse CIP step 1209 and the acid CIP step 1211 are greyed out. As discussed previously, this has the effect that the display elements are adjusted to show information with regards to the selected CIP steps 202-216 of the CIP cycle 200 (i.e., preflushing 1205, caustic 1207 and final rinse 1213). This can be seen particularly well in the first display element were the information regarding the CIP steps 202-216 of the CIP cycle 200 that are not selected in the CIP cycle element are greyed out. This has the advantages of emphasizing the information related to the CIP steps 202-216 of the CIP cycle 200 that were selected by the user. This may alleviate the burden of information overload and may lead to faster reaction times and decision making by the user. Moreover, the feature of selecting specific CIP steps 202-216 of the CIP cycles 200 may improve the analysis of shorter CIP cycles 200. Shorter CIP cycles 200 may only consist of a preflushing CIP step 1205, caustic CIP step 1207 and a final rinse CIP step 1213. Accordingly, focusing the user's attention on the relevant areas of the GUI may be advantageous.

Moreover, the parameter selection element of Fig. 10 has less sub-tabs than the parameter selection element 9115 of Fig. 9. More specifically, it shows four sub-tabs that display possible parameters selectable for further analysis, namely bowl speed, motor current, ejection and vibration. As previously mentioned, the number and type of parameters that are shown in the parameter selection element may be vary and may thus be subject to configuration by the user.

In general, the analysis, controlling and monitoring of the CIP cycle 200 may be performed in real time. Accordingly, relevant parameters such as temperature and bowl speed may be transmitted and analyzed in real time. Thus, a user may receive information about the CIP cycle 200 in real time which may enable to user to perform intervention in semi real time. Performing interventions in semi real time, such as increasing temperature if the temperature has been detected as too low or extending the time frame of one of the CIP steps 202-216 may have the advantage of preventing a rerun of one or more of the CIP steps 202-216.

Embodiments of the present disclosure may be realized in any of various forms, e.g., in software. For example, in some embodiments, the present invention may be realized as a computer-implemented method, a computer-readable memory medium, or a computer system.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a computing device may be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

Although specific embodiments have been described above, these embodiments are not intended to limit the scope of the present disclosure, even where only a single embodiment is described with respect to a particular feature. Examples of features provided in the disclosure are intended to be illustrative rather than restrictive unless stated otherwise. The above description is intended to cover such alternatives, modifications, and equivalents as would be apparent to a person skilled in the art having the benefit of this disclosure.

The scope of the present disclosure includes any feature or combination of features disclosed herein (either explicitly or implicitly), or any generalization thereof, whether or not it mitigates any or all of the problems addressed herein. In particular, with reference to the appended claims, features from dependent claims may be combined with those of the independent claims and features from respective independent claims may be combined in any appropriate manner and not merely in the specific combinations enumerated in the appended claims.

**Claims**

1. A computer-implemented method for generating a graphical user interface, GUI, for controlling and/or monitoring a cleaning-in-place, CIP, cycle (200) for an industrial production line (100) having one or more equipment (502a-c), the method comprising:

    generating at least one display (9111) element configured to show information associated with the CIP cycle (200);
    generating at least one control element (9108) configured to switch between at least two views; and
    including the at least one display element and the at least one control element in the GUI.

2. The method of claim 1, wherein the two or more views comprise a first view showing process specific CIP information and a second view showing equipment specific CIP information.

3. The method of any one of the preceding claims, wherein the step of generating the at least one display element comprises generating a CIP cycle quality display element (9111) configured to show an overall quality metric of the CIP cycle (200).

4. The method of any one of the preceding claims, wherein the step of generating the at least one display element comprises generating a CIP cycle element (9113) comprising a plurality of CIP cycle step elements, wherein each of the plurality of the CIP cycle step elements is configured to display information associated with a CIP step (202-216) of the CIP cycle (200).

5. The method of any one of the preceding claims, wherein the step of generating the at least one display element comprises generating a CIP cycle history element (9123) configured to display a historical overall quality metric of each of a plurality of CIP cycles (200).

6. The method of claim 5, wherein the step of generating the at least one control element comprises generating a time range selection element (9130) configured to adjust a number of the plurality of CIP cycles (200) for which the historical overall quality metric is displayed according to a selected time range.

7. The method of any one of the preceding claims, wherein the step of generating the at least one control element comprises generating a parameter selection element (9115) configured to adapt the content of a plurality of parameter display elements (9117, 9119, 9121) according to a selected parameter associated with the CIP cycle (200).

8. The method of claim 7, wherein a first parameter display element (9117) of the plurality of parameter display elements is configured to display parameter information associated with one or more CIP steps (202-216) of the CIP cycle (200).

9. The method of claim 7, wherein a second parameter display element (9121) of the plurality of parameter display elements is configured to display parameter information over a period of time; wherein the second parameter display element further displays a confidence interval of the parameter information.

10. The method of any one of claims 7 to 9, wherein the selected parameter associated with the one or more CIP steps (202-216) of the CIP cycle (200) is one of:

   a temperature parameter;
   a conductivity parameter;
   a bowl speed parameter;
   a motor current parameter;
   an ejection parameter; or
   a vibration parameter.

11. The method of any one of the preceding claims, wherein the one or more equipment (502a-c) comprises an industrial separator (102b).

12. A graphical user interface, GUI, generated according to any one of the methods 1 to 11.

13. A control unit usable with a cleaning-in-place, CIP, station (504) configured to display a graphical user interface, GUI, according to claim 12.

14. A cleaning-in-place, CIP, station (504) comprising a control unit according to claim 13.

15. A computer program comprising instructions which, when executed by a computer, cause the computer to carry out the method of any one of claims 1 to 11.

Fig. 1 (prior art)

Fig. 2 (prior art)

**Fig. 3**

Fig. 4

Fig. 5

**Fig. 6**

700

**Fig. 7**

800

| 802 | 804 | 806 | 808 | 810 | 812 |
|---|---|---|---|---|---|
| Get customer specific CIP sequence and thresholds per phase | Collect data of CIP phases | Filter all data for State = CIP | Select needed sensor values | In case not enough data is available: Generate simulated data | Split data into different CIPs and sub phases and generate unique ID per phase |

| Generate prelables with given thresholds | Use pretrained model for new model training | Test model results | Deploy trained model | Continuosly retrain model with new data labeld by customer |
|---|---|---|---|---|
| 814 | 816 | 818 | 822 | 824 |

Fig. 8

Fig. 9

EP 4 621 508 A1

Fig. 10

EP 4 621 508 A1

26

**EP 4 621 508 A1**

Europäisches Patentamt
European Patent Office
Office européen des brevets

# EUROPEAN SEARCH REPORT

**Application Number**

EP 24 16 4231

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/082884 A1 (AKBAR ALASKA [DE] ET AL) 14 March 2024 (2024-03-14)<br>* paragraph [0040] *<br>* paragraph [0064] *<br>* paragraph [0086] *<br>* paragraph [0113] - paragraph [0135] *<br>----- | 1-15 | INV.<br>G05B19/409<br>G05B23/02<br>G06F3/04847<br><br>ADD.<br>G05B19/042<br>G05B19/418 |
| X | BELEI OKCAHA LGOPIBHA ET AL: "Design of the human-machine interface for the cleaning-in-place system in the dairy industry",<br>EASTERN-EUROPEAN JOURNAL OF ENTERPRISE TECHNOLOGIES,<br>vol. 3, no. 2 (123),<br>28 June 2023 (2023-06-28), pages 44-51,<br>XP093199064,<br>ISSN: 1729-3774, DOI:<br>10.15587/1729-4061.2023.282695<br>Retrieved from the Internet:<br>URL:https://journals.uran.ua/eejet/article/download/282695/277697><br>* 5.2- 5.3 *<br>----- | 1-4,12,13,15 | |
| X | Anonymous: "PCS 7 Unit Template "CIP - Cleaning in Place"",<br>,<br>29 February 2024 (2024-02-29), pages 1-109, XP093199055,<br>Retrieved from the Internet:<br>URL:https://cache.industry.siemens.com/dl/files/886/78463886/att_1262670/v1/78463886_CIP_DOC_PCS7V91_SP2_en.pdf<br>* page 6 *<br>* page 19 - page 20 *<br>----- | 1-4,12,13,15 | TECHNICAL FIELDS SEARCHED (IPC)<br><br>G05B<br>G06F |

The present search report has been drawn up for all claims

| Place of search | Date of completion of the search | Examiner |
|---|---|---|
| The Hague | 28 August 2024 | De Porcellinis, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

27

## ANNEX TO THE EUROPEAN SEARCH REPORT
## ON EUROPEAN PATENT APPLICATION NO.

EP 24 16 4231

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2024

| Patent document cited in search report | Publication date | Patent family member(s) | | Publication date |
|---|---|---|---|---|
| US 2024082884 A1 | 14-03-2024 | US | 2024082884 A1 | 14-03-2024 |
| | | US | 2024278289 A1 | 22-08-2024 |
| | | WO | 2023211959 A1 | 02-11-2023 |

EPO FORM P0459

For more details about this annex : see Official Journal of the European Patent Office, No. 12/82